# EUROPEAN PATENT SPECIFICATION

(11) **EP 0 906 629 B1**
(45) Date of publication and mention of the grant of the patent: **19.02.2003**
(21) Application number: 97933184.0
(22) Date of filing: 16.06.1997
(51) Int. Cl.: G21D 3/00, G05B 23/02

(54) **METHOD AND DEVICE FOR ALARM SIGNIFICANCE MAPPING**
VERFAHREN UND VORRICHTUNG FÜR ALARM-SIGNIFIKANTES ABBILDEN
DISPOSITIF DE REPRESENTATION DES CONDITIONS DE FONCTIONNEMENT CRITIQUES D'UN SYSTEME ET METHODE IDOINE

(30) Priority: 20.06.1996 US 20118 P; 14.05.1997 US 856149
(43) Date of publication of application: 07.04.1999
(73) Proprietor: ABB Combustion Engineering Nuclear Power, Inc., Windsor, CT 06095 (US)
(72) Inventor: BRYAN, Robert, E., Bloomfield, CT 06002 (US)
(74) Representative: Miller, Toivo
(86) International application number: US9711187
(87) International publication number: WO97049099

(56) References cited:
- EP-A- 0 592 921
- DE-A- 4 240 898
- GB-A- 2 181 627
- GB-A- 2 272 326
- GB-A- 2 275 813
- RIDOLFO F ET AL: "THE NUPLEX 80+TM ADVANCED CONTROL COMPLEX FROM ABB COMBUSTION ENGINEERING" NUCLEAR SAFETY, vol. 34, no. 1, 1993, OAK RIDGE US, pages 64-75, XP000415223
- PATENT ABSTRACTS OF JAPAN vol. 097, no. 001, 31 January 1997 & JP 08 234829 A (TOSHIBA CORP), 13 September 1996,
- MINORU SAITO: "CONTROLLING POWER PLANTS AT THE TOUCH OF A SCREEN: JAPAN'S FOURTH GENERATION" NUCLEAR ENGINEERING INTERNATIONAL, vol. 38, no. 464, March 1993, SUTTON, SURREY, GB, pages 39-42, XP000390548

## Description

### CROSS REFERENCE TO RELATED APPLICATIONS

The subject matter of the present application is disclosed in applicant's co-pending Provisional U.S. Patent Application No. 60/020,118, filed June 20, 1996, from which priority is claimed.

### Background Art

The present invention relates to the mapping and display of visual alarm indications in complex industrial applications and, more particularly, to the mapping and display of visual alarm indications as part of the control and monitoring of nuclear power plants. Nuclear power plants are designed with multiple levels of instrumented redundancy in order to assure safe and reliable operation and to minimize the probability of a mishap. As part of the design philosophy, numerous parameters are continuously monitored, subjected to evaluation and analysis, and then displayed to the plant operators. Additionally, the measured parameters are subjected to limit testing to determine if a particular parameter is within normal bounds. In those cases where a parameter deviates from an accepted norm, an annunciator or alarm of some type is actuated.

In the earliest nuclear power plant control rooms, numerous instruments were displayed on the walls of the control room and on various consoles and display panels. The presence of an abnormal parameter would trigger one of several types of alarms, including audible alarms, visual alarms, and the like. In these earliest control room designs, the mounting of the instrument displays and their alarm annunciators on the typically large surface areas of the control room wall resulted in alarms that could be conceptually considered as residing in a two-dimensional plane. Alarms related to critical operational parameters could co-exit on the same 'plane' with alarms of a non-critical secondary or tertiary nature. Thus, an alarm related to an excessive and potentially non-safe pressure or temperature in the reactor core could co-exist on the same conceptual plane as an alarm indicating an out-of-limits condition on a tertiary system unrelated to operational safety. While the operators in the control room could easily identify and respond to alarms on a one-at-a-time basis, multiple alarms conditions for both primary safety-critical parameters and secondary or tertiary non-safety critical parameters could overload the ability of an operator or operators to prioritize the order in which alarms must be responded to in order to restore or maintain plant safety. While the safety significance of a visual alarm can be distinguished by providing visual indications of different colors, brightnesses, or 'flash' rates, these additional distinguishing characteristics could also overload the perceptual ability of even the most well - trained operators.

In later control room designs, an effort was made to group safety-related displays and alarms together as a way of affecting the 'topology' of the displayed parameters and alarms to affect the neural representation of the display in the minds of the operators. While this 'grouping' concept provided subliminal assistance to the plant operators, the two-dimensional display concept still presented all the instrumentation and alarms on a common physical plane which could contribute to the difficulty an operator could have in distinguishing alarms of different safety significance.

The problem of the display of data and the related alarms can be traced to the philosophy of assuring that every alarm condition, regardless of criticality, is immediately available to the control room operator. While this philosophy is admirably rooted in a desire to reveal all alarm conditions immediately to the control room operators, it also can contribute to operator overload during multi-alarm conditions.

With the advent of computerized monitoring and control of nuclear power plants, the various parameters and alarms and the safety critical relationship between parameters and alarms can be algorithmically evaluated and presented on video display units within the control room while making all alarms immediately available to the operator regardless of criticality. Thus, a number of operator consoles with CRT displays can present various process parameters and also display alarm conditions. concurrently, a large-area display (such as a rear-screen projector) in the control room would display all or a sub-portion of the screens of the various CRT'S. Since the amount of information that can be presented on the screen of a CRT is limited, it was not uncommon for information to be provided in a "paged" or "windowed" format. In this last schema, the alarms could be categorized by the supervising computer and displayed on the CRT's and large-area display; the operator could then page through a number of CRT menu screens to locate the source problem.

It is possible to conceptualize all the alarm conditions in a nuclear power plant as being required information in a hierarchy of display pages. Each alarm object has differing safety significance weights or factors depending upon its assignment to a display(s). Some alarm conditions have no affect, directly or indirectly, on operational safety while other alarms have a first-order relationship. Depending upon its display page context, an alarm may have a first-order relationship on one display and a supporting relationship on another display. Those alarms conditions that have safety significance can be thought of as occupying the 'apex' of the display page hierarchy. These alarm objects are connected by relational threads to one or more display pages in the other levels of the display page hierarchy.

Prior art discussions of alarm displays have been provided in British patent documents GB-A-2 272 326 and in GB-A-2 275 813 and also published in "Nuclear Safety," vol. 34, no. 1, Jan./March 1993 (pp. 64-75) and in "Nuclear Engineering International," vol. 38, no. 464, March 1993 (pp. 39-42).

Both GB-A-2 272 326 and GB-A-2 275 813 disclose menu-type displays for plant process parameters including alarm conditions.

GB-A-2 272 326 discloses a plant-wide monitoring system including a combined discrete indication and alarm system in which alarms of various types are prioritized and subject to display to the operator(s) on various screens.

GB-A-2 275 813 discusses alarm display pages of various levels in which an operator may move through different level alarm screens.

The "Nuclear Safety" publication discloses the use of fixed-position alarm tiles presented on touch-screen CRT displays. Lastly, the "Nuclear Engineering International" publication presents the concept of a hierarchal arrangement of the monitored and controlled functions in a nuclear power plant context using touch-screen controls.

### Disclosure of Invention

The present invention provides alarm significance mapping by selecting that subset of parameters and their alarms considered to be of a safety-critical nature and displaying that subset on a display, such as a touch-responsive display, as alarm icons for presentation to the control roam operators as the integrated plant status overview (IPSO) screen. Those parameters and their alarms not considered to be of an immediate safety-critical nature are intentionally not displayed on the IPSO screen but are nonetheless displayed on other screens and are accessible from the CRT display page directory menu.

Each alarm icon on the IPSO display is coupled or concatenated to other displays so that the operator, by selecting a particular alarm icon on the IPSO or display page directory menu screen, can follow the alarm 'thread' through the multi-level display hierarchy to the display page designed to indicate the ultimate condition or conditions that triggered an alarm on the IPSO screen and display page directory menu.

The present invention advantageously provides an alarm significance mapping method of alarm display in which only those alarm conditions deemed to have a predetermined critical impact on plant operation are displayed on icon-like symbols on display pages in a safety-critical display page hierarchy so that non-critical alarms which are also immediately presented in other display page hierarchies do not compromise operator efficiency in the face of a multi-alarm condition. Each displayed alarm icon can be used by the operator to follow a relational thread through the display page hierarchy to the cause or causes that initiated the alarm condition on the IPSO screen and display page directory menu.

Other objects and further scope of applicability of the present invention will become apparent from the detailed description to follow, taken in conjunction with the accompanying drawings, in which like parts are designated by like reference characters.

### Brief Description of the Drawings

The present invention is described below, by way of example, with reference to the accompanying drawings, wherein:
FIG. 1 is a plan view of an IPSO screen of safety-critical alarms in accordance with the present invention; and
FIG. 2 is a conceptual view of an alarm thread or pathway through the hierarchy of display pages for one of the alarm icons of the IPSO screen of FIG. 1.

### Best Mode for Carrying Out the Invention

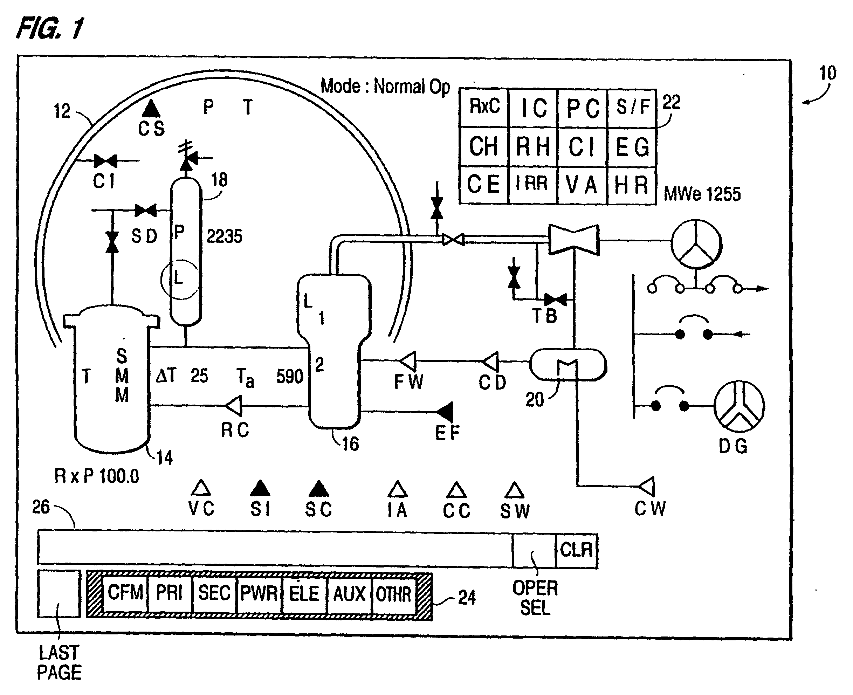

An alarm significance mapping system in accordance with the present invention is shown in FIG. 1 which illustrates a preferred IPSO display screen 10. The IPSO screen 10 is presented on a touch-responsive display that typically includes spaced orthogonal light beams that, when interrupted by the touch of an operator, identify the touched area of the display to the controlling. software. The display screen and all the related hardware and software are part of the Nuplex8O+ plant control system designed by ABB Combustion Engineering of Windsor, CT. The IPSO screen 10 includes a symbolic graphic overview representation of the plant processes including the containment vessel 12, the reactor 14, the steam generator 16, the pressurizer 18, the circulating water heat exchanger 20, and related piping, pumps, and valves. The proper operation of these systems is necessary to assure safe plant operation. A critical safety function alarm-acknowledgement matrix 22 is located to the right of the containment vessel 12, and a bar menu 24 is located at the lower portion of the IPSO screen 10 and all other CRT display screens in the plant display page hierarchy. The configuration shown in the IPSO screen 10 of FIG. 1 is merely exemplary. A number of isolateral triangular 'icons' are shown with associated mnemonics representing various sub-systems. These sub-systems are required to maintain or restore critical safety function parameters to the required values. Process measurements are represented by a letter symbol, i.e., P for pressure and T for temperature. The process variables are critical function parameters that must be maintained at the proper value to assure plant safety is maintained.

Within the upper portion of the containment vessel 12, the letters P and T represent containment vessel pressure and temperature, respectively, the mnemonic CS and the associated triangle symbol represent the containment spray system, the mnemonic CI and the associated valve symbol represent the containment isolation system, the mnemonic SD and the associated valve symbol represent the safety depressurization system, the letters P and L within the pressurizer 18 represent pressure within the pressurizer and the fluid level therein, respectively.

Within the reactor vessel 14, the symbol T represents temperature and the three vertical letters SMM represent the sub-cooled margin monitor, the letters RC and the associated left-pointing flow triangle symbol represent reactor cooling, the letter L within the steam generator 16 represents fluid level, the letters FW and the left-pointing flow triangle symbol represent feedwater, the letters CD and the associated left-pointing triangle represent condensate, the letters EF and the associated left-pointing triangle represent emergency feedwater, the letters CW and the associated left-pointing triangle represent cooling water, the letters TB and the associated valve symbols represent turbine bypass, and the letters DG and the associated symbol represent standby diesel generator status.

The row of triangular icons and associated two-letter symbols VC, SI, SC, IA, CC, and SW located beneath the steam generator 16 represent volume control, safety injection, shut-down cooling, instrument air, component cooling, and service water, respectively.

The various alarmable parameters and systems of the IPSO screen 10 of FIG. 1 represent that subset of the universe of alarm objects of the nuclear power plant that can be considered of a safety critical nature. Thus, the IPSO screen 10 is a map of representations for alarms considered to have significant effect on plant safety.

The display page directory menu 24 includes touch-responsive areas CFM, PRI, SEC, PWR, ELE, AUX, and OTHR which represent the critical function monitor, primary, secondary, power, electric, auxiliary, and other sectors of the power plant. Display pages unique to these directories are accessed here. Alarm conditions occurring in each directory are displayed on its touch target icon. A message window 26 is located above the bar menu 24 for presenting relevant messages to the operator.

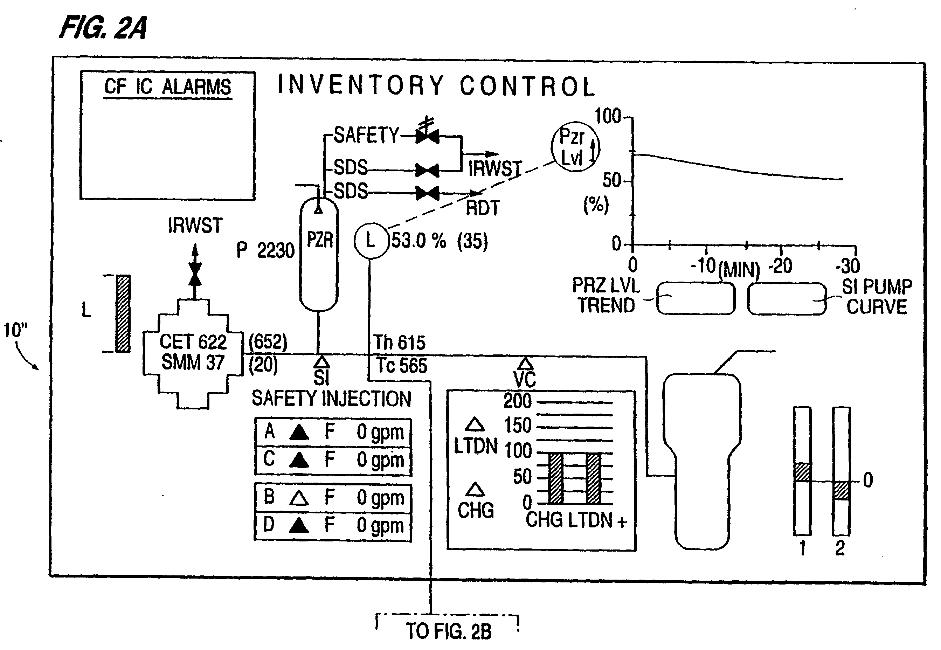

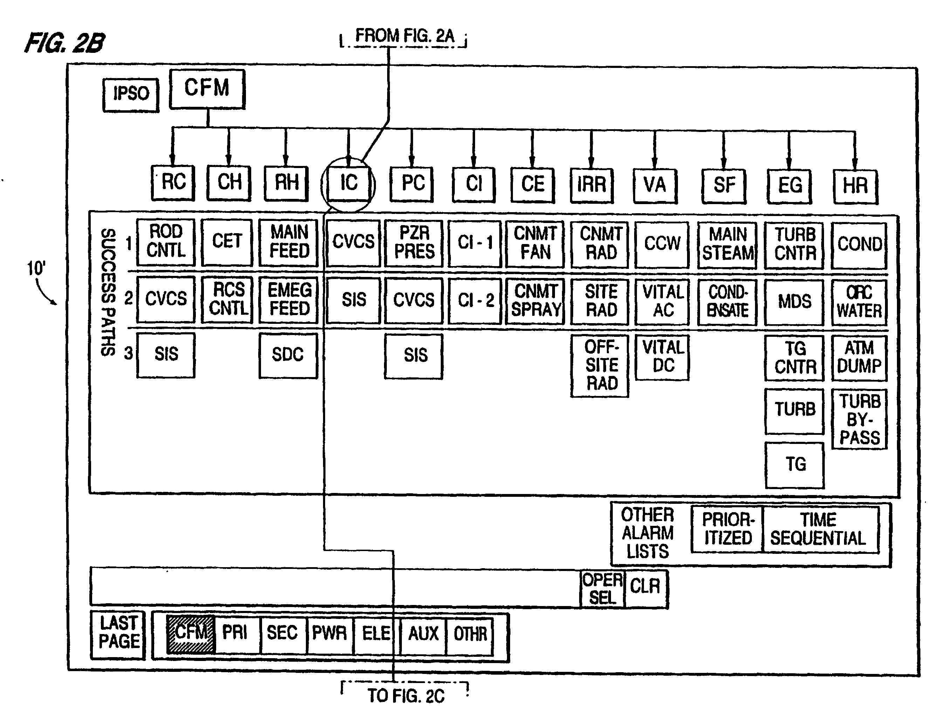

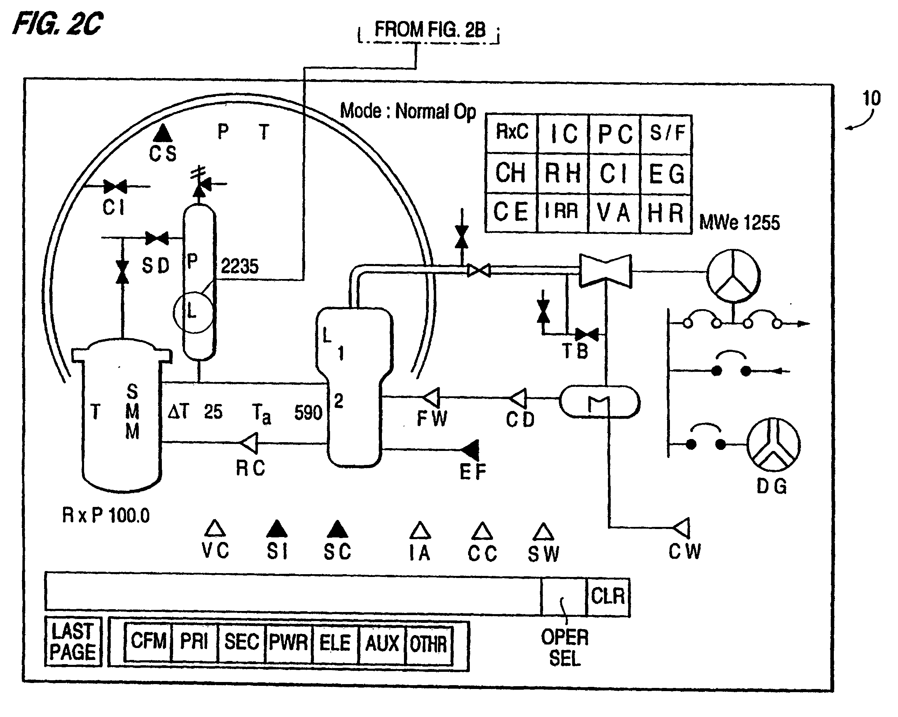

The underlying concept of alarm significance mapping in accordance with the present invention is best illustrated in FIG. 2. As shown, the IPSO screen of FIG. 1 represents a map of all significant alarms within the array of alarms. If, for example, an alarm condition develops which causes the level of water in the pressurizer 18 to go above or below its acceptable limits, an alarm condition within the alarm matrix will cause the single letter L indicator within the symbolically illustrated pressurizer 18 to change color or to blink on and off at a selected rate. Additionally, an audio annunciator will sound concurrently to audibly alert the control room operators of an alarm condition. Once the operator is alerted, the IPSO screen 10 is visually scanned for the alarm condition. The operator then can merely touch the alarm icon to acknowledge the alarm and select an alarm display page icon to go directly to a second screen 10' and thence to a third screen 10" to locate the display that has the necessary information to support successful correction of the alarm condition. The path followed from the IPSO screen 10 to the screen 10" thus represents the mapping of the alarm to its most significant display page that has that alarm. The alarm exists on several other necessary but less informative display pages. As can be appreciated, the particular screens 10' and 10" are representative only and a multiplicity of screens and alarm mappings are possible.

While the safety-critical alarm objects are displayed on the IPSO screen 10, the various icons and touch areas of the display screens in the various plant sector display page hierarchies can be used to access all of the alarm objects in the universe of alarm objects of the system.

### Industrial Applicability

The present invention is best suited for use in industrial process control systems, including those systems used in the control of nuclear power plants and preferably implemented in the Nuplex8O+ system by ABB Combustion Engineering, Inc. of Windsor, CT.

As will be apparent to those skilled in the art, various changes and modifications may be made tothe illustrated alarm significance mapping of the present invention without departing from the scope of the invention as determined in the appended claims.

## Claims

1. A significant-alarm display system for an industrial control system having a plurality of monitored alarm objects defined by parameters, components and sub-systems, and alarm conditions associated therewith, a subset of said monitored alarm objects having a predetermined criticality to successful operation of said industrial control system, said significant-alarm display system further having a video display system for displaying information on a display surface, said video display system being responsive to actuation of a selected portion of said display surface by touching, said significant-alarm display system **characterized by**:
an apex display screen (10) presenting an iconic representation for each monitored alarm object within said subset of said monitored alarm objects having said predetermined criticality to successful operation of said industrial control system, and
at least one additional screen (10',10") accessed by actuation of a selected iconic representation on said apex display screen, a touch of said selected iconic representation for the most critical of said alarm conditions causes a transfer by appropriate navigation aids to said at least one additional screen to locate a root cause of said most critical of said alarm conditions on the most desirable display page.

2. A display system as set forth in claim 1, wherein said apex display screen (10) is a touch-responsive display.

3. A display system as set forth in claim 1, wherein said iconic representation of said each monitored object of said subset of monitored objects includes a containment vessel (12), a reactor (14), a steam generator (16), a pressurizer (18), a circulating water heat exchanger (20), and related plumbing.

4. A display system as set forth in claim 3, wherein said apex display screen includes alarm-acknowledgement (a) matrix (22), (b) parameter icons, (c) system icons, and (d) display page directory icons.

5. A method for displaying significant alarms in an industrial control system having a plurality of monitored alarm objects defined by parameters, components and sub-systems, and alarm conditions associated therewith, a subset of said monitored alarm objects having a predetermined criticality to successful operation of said industrial control system, said industrial control system further having a video display system for displaying information on a display surface, said video display system being responsive to actuation of a selected portion of said display surface by touching, said method **characterized by**:
displaying, on said display surface, an iconic representation of each monitored alarm object of said subset of monitored alarm objects having said predetermined criticality to successful operation of said industrial control system, and
providing access to at least one additional screen (10', 10") by appropriate navigation aids by actuation of a selected iconic representation for the most critical of said alarm conditions on said display surface to cause a transfer by appropiate navigation aids to said at least one additional screen to locate a root cause of said most critcal of said alarm conditions.

## Patentansprüche

1. Anzeigesystem für signifikanten Alarm für ein industrielles Steuersystem mit einer Vielzahl überwachter Alarmobjekte, die durch Parameter, Komponenten, Subsysteme und damit verbundene Alarmzustände definiert sind, wobei eine Untermenge der überwachten Alarmobjekte einen vorherbestimmten Schweregrad für den erfolgreichen Betrieb des industriellen Steuersystems aufweist, das Anzeigesystem für signifikanten Alarm des Weiteren ein Video-Anzeigesystem aufweist, um Informationen auf einem Darstellungsmedium anzuzeigen, und das Video-Anzeigesystem auf Betätigung durch Berührung eines ausgewählten Abschnitts des Darstellungsmediums anspricht, wobei das Anzeigesystem für signifikanten Alarm **gekennzeichnet ist durch**:
einen Hauptanzeigebildschirm (10), der ein Piktogramm für jedes überwachte Alarmobjekt innerhalb der Untermenge der überwachten Alarmobjekte, die den vorherbestimmten Schweregrad für den erfolgreichen Betrieb des industriellen Steuersystems aufweisen, darstellt, und
mindestens einen zusätzlichen Bildschirm (10', 10"), auf den **durch** Betätigung eines ausgewählten Piktogramms auf dem Hauptanzeigebildschirm zugegriffen wird, wobei eine Berührung des ausgewählten Piktogramms für den schwerwiegendsten der Alarmzustände eine Übertragung mit Hilfe von geeigneten Navigationshilfen zu dem mindestens einen zusätzlichen Bildschirm verursacht, um eine Grundursache des schwerwiegendsten der Alarmzustände auf der angemessensten Anzeigeseite aufzufinden.

2. Anzeigesystem nach Anspruch 1, wobei der Hauptanzeigebildschirm (10) ein Berührungsbildschirm ist.

3. Anzeigesystem nach Anspruch 1, wobei das Piktogramm jedes überwachten Objekts der Untermenge überwachter Objekte einen Sicherheitsbehälter (12), einen Reaktor (14), einen Dampfgenerator (16), ein Druckhaltevorrichtung (18), einen Wärmetauscher für Umlaufwasser (20) und angeschlossene Rohrleitungen umfasst.

4. Anzeigesystem nach Anspruch 3, wobei der Hauptanzeigebildschirm (a) eine Alarmquittierungs-Matrix (22), (b) Alarmquittierungs-Parameterpiktogramme, (c) Alarmquittierungs-Systempiktogramme und (d) Alarmquittierungs-Anzeigeseiten-Verzeichnispiktogramme umfasst.

5. Verfahren zur Anzeige signifikanter Alarme in einem industriellen Steuersystem mit einer Vielzahl überwachter Alarmobjekte, die durch Parameter, Komponenten, Subsysteme und damit verbundene Alarmzustände definiert sind, wobei eine Untermenge der überwachten Alarmobjekte einen vorherbestimmten Schweregrad für den erfolgreichen Betrieb des industriellen Steuersystems aufweist, das industrielle Steuersystem weiterhin ein Video-Anzeigesystem aufweist, um Informationen auf einem Darstellungsmedium anzuzeigen, und das Video-Anzeigesystem auf Betätigung durch Berührung eines ausgewählten Abschnitts des Darstellungsmediums anspricht, wobei das Verfahren **gekennzeichnet ist durch**:
das Anzeigen eines Piktogramms jedes überwachten Alarmobjekts der Untermenge der überwachten Alarmobjekte, die den vorherbestimmten Schweregrad für den erfolgreichen Betrieb des industriellen Steuersystems aufweisen, auf dem Darstellungsmedium, und
das Bereitstellen eines Zugriffs auf mindestens einen zusätzlichen Bildschirm (10', 10") mit Hilfe von geeigneten Navigationshilfen **durch** Betätigung eines ausgewählten Piktogramms für den schwerwiegendsten der Alarmzustände auf dem Darstellungsmedium, um eine Übertragung mit Hilfe von geeigneten Navigationshilfen zu dem mindestens einen zusätzlichen Bildschirm zu verursachen, um eine Grundursache des schwerwiegendsten der Alarmzustände aufzufinden.

## Revendications

1. Dispositif d'affichage d'alarmes significatives pour un système de commande industriel comprenant une pluralité d'objets d'alarme surveillés définis par des paramètres, des composants et des sous-systèmes, ainsi que des conditions d'alarme associées à ceux-ci, un sous-ensemble desdits objets d'alarme surveillés ayant une valeur critique prédéterminée pour le bon fonctionnement dudit système de commande industriel, ce dispositif d'affichage des alarmes significatives comprenant en outre un système d'affichage vidéo destiné à afficher les informations sur une surface d'affichage, lequel système d'affichage vidéo peut réagir à l'activation tactile d'une partie sélectionnée de ladite surface d'affichage, le dispositif d'affichage d'alarmes significatives étant **caractérisé en ce qu'**il possède :
un écran d'affichage supérieur (10) donnant une représentation par icône de chaque objet d'alarme surveillé dans ledit sous-ensemble d'objets d'alarme surveillés ayant ladite valeur critique prédéterminée pour le bon fonctionnement dudit système de commande industriel, et
au moins un autre écran (10', 10") auquel on accède en activant une représentation par icône sélectionnée dans ledit écran d'affichage supérieur, l'activation tactile de ladite représentation par icône sélectionnée pour la plus critique desdites conditions d'alarme entraînant le transfert par des aides à la navigation appropriés vers au moins un écran supplémentaire afin de localiser la cause sous jacente de ladite condition d'alarme la plus critique sur lapage d'affichage la plus adéquate.

2. Système d'affichage selon la revendication 1, **caractérisé en ce que** ledit écran d'affichage supérieur (10) est un écran tactile.

3. Système d'affichage selon la revendication 1, **caractérisé en ce que** ladite représentation par icône de chaque objet surveillé dans ledit sous-ensemble d'objets surveillés comprend une enceinte de confinement (12), un réacteur (14), un générateur de vapeur (16), un pressuriseur (18), un échangeur de chaleur (20) pour l'eau en circulation et les conduites associées.

4. Système d'affichage selon la revendication 3, **caractérisé en ce que** ledit écran d'affichage supérieur comprend (a) une grille (22) d'acquittement des alarmes, (b) des icônes de paramètre, (c) des icônes de système et (d) des icônes de répertoire de pages d'affichage.

5. Procédé d'affichage d'alarmes significatives dans un système de commande industriel comprenant une pluralité d'objets surveillés définis par des paramètres, des composants et des sous-systèmes, ainsi que des conditions d'alarme associées à ceux-ci, un sous-ensemble desdits objets d'alarme surveillés ayant une valeur critique prédéterminée pour le bon fonctionnement dudit système de commande industriel, ledit système de commande industriel possédant en outre un système d'affichage vidéo destiné à afficher les informations sur une surface d'affichage, lequel système d'affichage vidéo peut réagir à l'activation tactile d'une partie sélectionnée de ladite surface d'affichage, le procédé étant **caractérisé par** les étapes suivantes :
affichage sur ladite surface d'affichage d'une représentation par icône de chaque objet d'alarme surveillé dans ledit sous-ensemble d'objets d'alarme surveillés ayant ladite valeur critique prédéterminée pour le bon fonctionnement dudit système de commande industriel, et
accès à au moins un écran supplémentaire (10', 10") grâce des aides à la navigation appropriés par l'activation d'une représentation par icône sélectionnée pour la plus critique desdites conditions d'alarme en vue d'obtenir le transfert par des aides à la navigation appropriés vers ledit écran supplémentaire au nombre d'un au moins afin de localiser la cause sous-jacente de ladite condition d'alarme la plus critique.
